# EUROPÄISCHE PATENTSCHRIFT

(11) **EP 2 668 818 B1**
(45) Veröffentlichungstag und Bekanntmachung des Hinweises auf die Patenterteilung: **18.05.2016**
(21) Anmeldenummer: 11797242.2
(22) Anmeldetag: 14.12.2011
(51) Int. Cl.: H05B 1/02

(54) **ELEKTRISCHE HEIZUNG, FAHRZEUG MIT ELEKTRISCHER HEIZUNG SOWIE VERFAHREN ZUM STEUERN EINER ELEKTRISCHEN HEIZUNG**
ELECTRICAL HEATER, VEHICLE HAVING AN ELECTRICAL HEATER AND METHOD FOR CONTROLLING AN ELECTRICAL HEATER
CHAUFFAGE ÉLECTRIQUE, VÉHICULE DOTÉ D'UN CHAUFFAGE ÉLECTRIQUE ET PROCÉDÉ DE COMMANDE D'UN CHAUFFAGE ÉLECTRIQUE

(30) Priorität: 28.01.2011 DE 102011009672
(43) Veröffentlichungstag der Anmeldung: 04.12.2013
(73) Patentinhaber: Webasto SE, 82131 Stockdorf (DE)
(72) Erfinder: SEILER, Heinz, 81475 München (DE); BOTZENMAYER, Norbert, 83671 Benediktbeuern (DE); ZEYEN, Michael, 76863 Herxheim (DE); BYTZEK, Dietmar, 76726 Germersheim (DE)
(74) Vertreter: Schumacher & Willsau
(86) Internationale Anmeldenummer: PCT/EP2011/072792
(87) Internationale Veröffentlichungsnummer: WO 2012/100878

(56) Entgegenhaltungen:
- WO-A2-02/089526
- DE-A1-102005 010 470
- DE-A1-102007 012 631
- US-A1- 2004 232 137

## Beschreibung

Die vorliegende Erfindung betrifft eine elektrische Heizung, sowie ein Fahrzeug mit einer elektrischen Heizung und ein Verfahren zum Steuern einer elektrischen Heizung.

Bei modernen Fahrzeugen werden häufig Standheizungen oder Zusatzheizungen eingesetzt. In vielen Fällen sind derartige Heizungen mit einem Brenner ausgestattet, um einen Brennstoff des Fahrzeugs zu verbrennen. Bei zunehmend auftretenden Elektrofahrzeugen, die ohne Brennstoff betrieben werden, sind derartige Stand- oder Zusatzheizungen nicht verwendbar, da Elektrofahrzeuge normalerweise keinen Brennstoff mit sich führen und es unzweckmäßig ist, lediglich für eine Heizung einen Brennstofftank vorzusehen. Stattdessen biete es sich für Elektrofahrzeuge an, eine elektrisch betriebene Heizung zu verwenden. Eine elektrische Heizung kann allerdings auch für den Einsatz in Fahrzeugen mit Verbrennungsmotoren vorgesehen sein, etwa um Brennstoffzuleitungen einzusparen. Im Betrieb können elektrische Heizungen empfindlich auf Schwankungen der Heizspannung reagieren, mit der ihre Heizelemente versorgt werden. Andererseits stellen elektrische Heizungen ihrerseits Verbraucher mit hohen Leistungsanforderungen dar, so dass ein schwankender, beispielsweise gepulster, Heizbetrieb sich negativ auf die Stabilität der Spannungsversorgung auswirken kann. Beispielsweise können in einer elektrischen Heizung Rippelströme entstehen, die sich über ein elektrisches Netz ausbreiten können, an welches die Heizung angeschlossen ist.

Dokumenten WO 02/089526 A2 und DE 10 2007 12 63 A1 offenbaren elektrische Heizungen für Kraftfahrzeuge wobei Widerstandsheizeinrichtungen elektrisch seriell oder parallel geschaltet werden.

Eine Aufgabe der vorliegenden Erfindung besteht darin, eine elektrische Heizung bereitzustellen, die auch bei unterschiedlichen Versorgungsspannungen oder einer veränderlichen Versorgungsspannung effizient und genau gesteuert werden kann. Es soll auch ein Fahrzeug mit einer derartigen Heizung sowie ein effizientes Verfahren zum Steuern einer elektrischen Heizung bereitgestellt werden.

Diese Aufgabe wird durch die Merkmale der unabhängigen Ansprüche gelöst.

Weitere vorteilhafte Ausgestaltungen und Weiterbildungen der Erfindung ergeben sich aus den abhängigen Ansprüchen.

Im Rahmen dieser Beschreibung ist als eine elektrische Heizung eine Heizung zu verstehen, die elektrische Energie in Wärme umsetzt, um ein Medium oder ein Volumen direkt oder indirekt zu heizen. Ein derartiges Medium kann ein Fluid sein, etwa ein Gas wie Luft oder eine Flüssigkeit wie Wasser. Die elektrische Heizung ist insbesondere für einen mobilen Einsatz vorgesehen, beispielsweise für ein Fahrzeug, etwa einem Elektro-Fahrzeug. Zur Umsetzung von elektrischer Energie in Wärme kann beispielsweise eine Widerstandsheizeinrichtung verwendet werden. Eine Widerstandsheizeinrichtung kann einen oder mehrere elektrische Widerstände oder Heizelemente aufweisen. Ein elektrischer Widerstand, der Wärme erzeugt, wenn ein elektrischer Strom ihn durchfließt, kann als Heizwiderstand oder Heizelement angesehen werden. Ein derartiger Heizwiderstand einer Widerstandsheizeinrichtung ist im Allgemeinen mit einem im Vergleich zu Leitungswiderständen hohen Widerstandswert ausgestattet. Ein Heizwiderstand kann beispielsweise in Form eines zu einer Spule gewickelten Leitungsdrahtes oder Heizdrahtes ausgebildet sein. Eine Widerstandsheizeinrichtung kann dadurch gekennzeichnet sein, dass ein Großteil beziehungsweise der größte Teil der von ihr erzeugten Wärme über einen oder mehrere elektrische Widerstände erzeugt wird. Insbesondere kann vorgesehen sein, dass von einer Widerstandsheizeinrichtung umgesetzte elektrische Leistung im Wesentlichen oder größtenteils in Wärme umgesetzt wird. Der zum Erzeugen von Wärme oder zum Erwärmen eines zum Erwärmen vorgesehenen Mediums oder Volumens wirksame Widerstandswert einer Widerstandsheizeinrichtung oder eines Heizwiderstands kann als Heizwiderstandswert bezeichnet werden. Eine derartige Widerstandsheizeinrichtung oder ein Heizwiderstand kann insbesondere ein metallisches und/oder leitendes Material umfassen oder daraus hergestellt sein. Das Material kann einen im Wesentlichen mit der Temperatur linear steigenden elektrischen Widerstand aufweisen. Es kann insbesondere zweckmäßig sein, wenn ein Heizwiderstand oder eine Widerstandsheizeinrichtung aus einem Kaltleitermaterial aufweist oder aus einem solchen hergestellt ist. Das Material kann nichtkeramisch sein. Eine Spannungsquelle oder Stromquelle kann eine Heizspannung oder einen Heizstrom für die elektrische Heizung bereitstellen. Dabei kann insbesondere ein Bordnetz eines Fahrzeugs, insbesondere eines Elektrofahrzeugs, als Spannungsquelle einer Heizspannung dienen. Die Heizspannung oder Versorgungsspannung kann eine Gleichspannung sein. Als eine Heizspannung oder Versorgungsspannung kann diejenige Spannung angesehen werden, die zur Umwandlung von elektrischer Energie in Wärme an eine oder mehrere Widerstandsheizeinrichtungen oder Heizwiderstände angelegt wird. Eine Spannungsversorgung kann eine nominale Spannung bereitstellen. Es kann vorgesehen sein, dass eine Spannungsversorgung eine maximale Spannung bereitstellt. Diese maximale Spannung kann der Nominalspannung gleich sein, oder geringfügig, insbesondere um 1%, 5%, 7%, 10% oder 20% darüber liegen. Eine Nominalspannung kann über oder bei 250V, 400V, 500V, 550V, 600V oder 650V liegen. Die hierin erwähnten Spannungswerte, insbesondere die Grenzwerte, können als Betragswerte von Spannungen angesehen werden. Somit wäre in üblicher Weise eine Spannung von -250V als größer anzusehen als eine Spannung von -50V, da ihr Betrag größer ist. Ob ein Spannungswert unterhalb oder oberhalb eines Grenzwertes liegt kann beispielsweise dadurch überprüft werden, ob eine entsprechende Änderung des Spannungswertes vorliegt. Es ist vorstellbar, dass die Versorgungsspannung zeitlich nicht konstant ist, etwa dann, wenn bei einem Einsatz durch das Zuschalten von Verbrauchern ein Einbruch einer Spannung unter eine Nominalspannung auftritt. Eine elektrische Heizung kann pulsweitenmoduliert betrieben werden. In diesem Fall können über eine Pulsweitenmodulationseinrichtung die elektrische Heizung und/oder die Widerstandsheizeinrichtung oder Widerstandheizeinrichtungen einer elektrischen Heizung derart angesteuert sein, dass sie gemäß einem oder mehreren Pulssteuersignalen betrieben sind. Insbesondere kann ein Stromfluss durch eine Widerstandsheizeinrichtung oder einen Heizwiderstand gemäß einem Pulssteuersignal erfolgen. Dabei kann etwa ein Transistor gemäß dem Pulssteuersignal einen Stromfluss durch eine Widerstandsheizeinrichtung ermöglichen. Ein solcher Transistor kann beispielsweise ein Bipolartransistor mit isolierter Gate-Elektrode (engl: insulated-gate bipolar transistor; IGBT), ein Metall-Oxid-Halbleiter-Feldeffekttransistor (engl: metal oxide semiconductor field-effect transistor; MOSFET) oder ein Transistor anderer Bauart sein. Eine Pulsweitenmodulationseinrichtung kann einen oder mehrere Transistoren aufweisen, die durch unterschiedliche oder gleiche Pulssteuersignale angesteuert sein können. Ein Pulssteuersignal kann periodisch sein. Es kann einen oder mehrere Nulldurchläufe pro Periode aufweisen. Es ist vorstellbar, dass ein Pulssteuersignal im Wesentlichen ein Rechtecksignal ist. Unterschiedliche Pulssteuersignale können sich insbesondere hinsichtlich ihrer Phasen unterscheiden. Als ein Maß einer Pulsweitenmodulation kann ein Prozentwert angegeben sein. Der Prozentwert kann dabei den Anteil an einer Periode oder an einem Zeitraum beschreiben, in dem ein Pulssteuersignal einen Stromfluss durch eine Widerstandsheizeinrichtung oder einen Heizwiderstand ermöglicht. In diesem Zusammenhang kann ein zeitlich konstantes Signal als ein Signal mit einer Pulsweitenmodulation von 100% angesehen werden. Es kann vorgesehen sein, dass eine Pulsweitenmodulationseinrichtung keinen Stromfluss durch eine oder mehr als eine zugeordnete Widerstandsheizeinrichtung zulässt, wenn nicht ein entsprechendes Pulssteuersignal anliegt. Es kann davon ausgegangen werden, dass ein Pulssteuersignal zum Ermöglichen eines Stromflusses anliegt, wenn das Pulssteuersignal eine vorbestimmte Amplitude oder einen vorbestimmten Amplitudenbetrag aufweist oder überschreitet. Eine elektrische Heizung kann dazu ausgelegt sein, eine Heizleistung in einem bestimmten Leistungsbereich bereitzustellen. Insbesondere kann eine elektrische Heizung für eine maximale Heizleistung ausgelegt sein. Die maximale Heizleistung kann auf eine maximale und/oder nominale Versorgungsspannung abgestimmt sein. Es kann zweckmäßig sein, wenn die maximale Heizleistung etwa 3000W, 4000W, 5000W, 6000W oder 7000W beträgt oder übersteigt. Eine elektrische Heizung kann bezüglich der Heizleistung einstellbar sein. Es kann vorgesehen sein, dass eine gewünschte oder geforderte Heizleistung einstellbar ist. Dazu kann eine Einstellvorrichtung zum Einstellen der gewünschten Heizleistung vorhanden sein. Für Schaltelemente wie Transistoren gilt allgemein, dass sie sich in einem "An"-Zustand befinden können, wenn ein Steuersignal oder Schaltsignal an sie gelegt wird, so dass sie einen bestimmten Stromdurchfluss ermöglichen. Für Transistoren kann dies insbesondere bedeuten, dass ein Steuersignal an einem Steuereingang ("Gate") anliegt, um über den Eingang und den Ausgang des Transistors einen Stromfluss zu erlauben. Für elektromechanische Schalter kann ein Schaltsignal oder Steuersignal auf einen Elektromagneten wie eine Spule wirken, um eine gewünschte Schalterposition zu erreichen.

Es wird eine elektrische Heizung mit mindestens einer ersten Widerstandsheizeinrichtung und einer zweiten Widerstandsheizeinrichtung beschrieben. Die elektrische Heizung weist mindestens eine Pulsweitenmodulationseinrichtung auf, die es vermag, die erste Widerstandsheizeinrichtung und/oder die zweite Widerstandsheizeinrichtung pulsweitenmoduliert zu betreiben, sowie mindestens eine Schalteinrichtung. Die Schalteinrichtung vermag es, für einen Heizbetrieb die erste Widerstandsheizeinrichtung und die zweite Widerstandsheizeinrichtung wahlweise zwischen einem ersten Heizmodus, in welchem die erste Widerstandsheizeinrichtung und die zweite Widerstandsheizeinrichtung elektrisch seriell geschaltet sind, und einem zweiten Heizmodus umzuschalten, in welchem die erste Widerstandsheizeinrichtung und die zweite Widerstandsheizeinrichtung elektrisch parallel geschaltet sind. Je nach Heizmodus bieten somit die erste Widerstandsheizeinrichtung und die zweite Widerstandsheizeinrichtung einen unterschiedlichen Gesamtheizwiderstand, der sich entsprechend auf das Heizverhalten der elektrischen Heizung auswirkt. Im ersten und/oder zweiten Heizmodus können die erste Widerstandheizeinrichtung und die zweite Widerstandsheizeinrichtung nach Maßgabe der Pulsweitenmodulationseinrichtung stromleitend mit einer Spannungsversorgung verbunden sein, so dass ein Heizstrom durch sie hindurchfließt oder hindurchfließen kann. Im zweiten Heizmodus, wenn die erste Widerstandsheizeinrichtung und die zweite Widerstandsheizeinrichtung elektrisch parallel geschaltet sind, ergibt sich für die Heizung ein insgesamt niedrigerer Gesamtheizwiderstand als im ersten Heizmodus, in welchem die erste Widerstandsheizeinrichtung und die zweite Widerstandsheizeinrichtung elektrisch seriell geschaltet sind. Durch die beschriebene Anordnung ergibt sich eine kompakte Konstruktion der Heizung, die wenig Bauraum beansprucht. Die elektrische Heizung lässt sich auch bei zeitlich veränderlicher Versorgungsspannung effizient betreiben. Insbesondere ermöglichen die unterschiedlichen Heizmodi eine Anpassung des Heizbetriebs an unterschiedliche geforderte Heizleistungen und variierende Versorgungsspannungen derart, dass sich eine verbesserte Steuerung der Heizleistung durch die Pulsweitenmodulation ergibt. Die Heizwiderstandswerte der ersten Widerstandsheizeinrichtung und der zweiten Widerstandsheizeinrichtung können im Wesentlichen gleich sein, oder sie können unterschiedlich ausgelegt sein. Bei gleichen Heizwiderstandswerten ergibt sich eine besonders unkomplizierte Handhabung und Steuerung der elektrischen Heizung. Die Widerstandsheizeinrichtungen, insbesondere Heizwiderstände der Widerstandsheizeinrichtungen, können in Kontakt mit einem zu erwärmendem Medium stehen. Das Medium kann ein Fluid sein, etwa ein Gas wie beispielsweise Luft oder eine Flüssigkeit wie beispielsweise Wasser. Es kann vorgesehen sein, dass Heizwiderstände der Widerstandsheizeinrichtungen, die zum Kontakt mit einem zu erwärmenden Medium vorgesehen sind, durch eine geeignete elektrische Isolierung gegenüber dem Medium, insbesondere gegenüber Wasser, isoliert sind. Dabei kann es zweckmäßig sein, wenn die Isolierung eine gute thermische Leitfähigkeit aufweist. Die elektrische Heizung kann zwei unabhängig voneinander schaltbare Abschaltpfade aufweisen. Ein erster Abschaltpfad kann durch die Pulsweitenmodulationseinrichtung bereitgestellt sein. Insbesondere kann es zweckmäßig sein, wenn die Pulsweitenmodulationseinrichtung dann, wenn sie nicht bestromt ist oder kein Pulssteuersignal an ihr anliegt, einen Heizbetrieb der Heizung unterbricht oder nicht zulässt. Es kann auch vorgesehen sein, dass für den Fall, dass mehrere Pulssteuersignale und/oder Pulssteuersignalpfade verwendet werden, die Pulsweitenmodulationseinrichtung die Heizung abschaltet, wenn für bestimmte Heizmodi ein bestimmtes Pulssteuersignal nicht anliegt, etwa weil eine Fehlfunktion vorliegt. Ein zweiter Abschaltpfad kann durch die Schalteinrichtung bereitgestellt sein. Es kann zweckmäßig sein, wenn die Schalteinrichtung im unbestromten Zustand und/oder dann, wenn kein Schaltsignal anliegt und/oder ein bestimmtes Schaltsignal nicht anliegt, die Heizung abschaltet oder die Stromversorgung zu der ersten Widerstandsheizeinrichtung und/oder der zweiten Widerstandsheizeinrichtung unterbricht oder nicht zulässt. Die Schalteinrichtung kann ein, zwei oder mehr unabhängig voneinander schaltbare Schaltelemente aufweisen. Die Schaltelemente können elektromechanische und/oder Halbleiter-Schaltelemente sein. Die Pulsweitenmodulationseinrichtung kann ein, zwei oder mehr unabhängig voneinander schaltbare Elemente aufweisen, die insbesondere Halbleiterelemente sein können.

Es kann vorgesehen sein, dass die Schalteinrichtung es ferner vermag, für einen Heizbetrieb die erste Widerstandsheizeinrichtung und die zweite Widerstandsheizeinrichtung in einen dritten Heizmodus zu schalten, in welchem die erste Widerstandsheizeinrichtung oder die zweite Widerstandsheizeinrichtung allein betrieben ist. Die allein betriebene Widerstandsheizeinrichtung kann derart geschaltet sein, dass sie nach Maßgabe der Pulsweitenmodulationseinrichtung stromleitend mit einer Spannungsversorgung verbunden ist, so dass ein Heizstrom durch sie hindurchfließt oder hindurchfließen kann. Insbesondere kann vorgesehen sein, dass die im dritten Heizmodus nicht betriebene Widerstandsheizeinrichtung in diesem Heizmodus abgeschaltet ist oder nicht stromleitend mit einer Versorgungsspannung verbunden ist. Somit kann für den Heizbetrieb ein zusätzlicher Heizwiderstandswert verwendet werden, der nur von der ersten Widerstandsheizeinrichtung oder der zweiten Widerstandsheizeinrichtung abhängt. Es kann zweckmäßig sein, die Schalteinrichtung derart auszubilden, dass sie es vermag, in einem dritten Heizmodus die erste Widerstandsheizeinrichtung für einen Alleinbetrieb zu schalten und für einen vierten Heizmodus die zweite Widerstandsheizeinrichtung für einen Alleinbetrieb zu schalten. Somit kann eine Redundanz der Widerstandsheizeinrichtungen verwirklicht werden. Darüber hinaus kann für den Fall, dass die Widerstandswerte der ersten Widerstandsheizeinrichtung und der zweiten Widerstandsheizeinrichtung unterschiedlich sind, ein weiterer Heizwiderstandswert für einen Heizbetrieb verwendet werden.

Die Schalteinrichtung kann als eine Relaisschaltung ausgebildet sein. Insbesondere können ein oder mehr elektrisch betätigte oder betätigbare mechanische Schalter als Relaiselemente vorgesehen sein, um zwischen den Heizmoden umzuschalten. Ein solcher Schalter kann als Schaltelement der Schalteinrichtung vorgesehen sein. Dies ermöglicht eine robuste Konstruktion der Heizeinrichtung. Es kann zweckmäßig sein, dass die Schalteinrichtung zusätzlich ein oder mehrere schaltbare Halbleiterelemente als Schaltelemente aufweist.

Die Schalteinrichtung kann als eine Quasi-Vollbrücke ausgebildet sein. Dabei können im Wesentlichen Halbleiterschaltelemente eingesetzt sein. Eine derartige Quasi-Vollbrücke ist kostengünstig und platzsparend. Des Weiteren treten bei einer derartigen Lösung keine eventuell störenden Schaltgeräusche auf.

Bei einer Weiterbildung kann der Heizwiderstandswert der ersten Widerstandsheizeinrichtung dem Heizwiderstandswert der zweiten Widerstandsheizeinrichtung im Wesentlichen gleich sein. Somit ergibt sich ein symmetrischer und besonders einfacher Aufbau der elektrischen Heizung.

Im ersten Heizmodus und/oder im zweiten Heizmodus können die erste Widerstandsheizeinrichtung und die zweite Widerstandsheizeinrichtung an eine gemeinsame Stromquelle angeschlossen sein. Somit lassen sich eine einfache Steuerung und ein einfacher Betrieb der elektrischen Heizung erreichen.

Die elektrische Heizung weist eine Steuereinrichtung auf. Die Steuereinrichtung kann beispielsweise als eine elektronische Steuereinrichtung mit einem geeigneten Mikrocontroller oder Steuerchip ausgebildet sein. Es kann dabei zweckmäßig sein, wenn die Steuereinrichtung mit einer übergeordneten Steuereinrichtung kommuniziert und/oder als eine gemeinsame Steuereinrichtung ausgebildet ist, die neben der elektrischen Heizung auch andere Einrichtungen zu steuern vermag. Beispielsweise kann die Steuereinrichtung der elektrischen Heizung mit einem Bordrechner eines Fahrzeugs verbunden sein, etwa über ein geeignetes Fahrzeugkommunikationsnetzwerk wie einem Bussystem, insbesondere einem CAN-Bus oder LIN-Bus. Es ist auch vorstellbar, dass die Steuereinrichtung der elektrischen Heizung direkt in ein Bordcomputersystem eines Fahrzeugs oder eine Klimatisierungseinrichtung des Fahrzeugs integriert ist. Die Steuereinrichtung kann mit einer Einstelleinrichtung zum Einstellen einer geforderten Heizleistung verbunden sein. Es ist vorstellbar, dass die Einstelleinrichtung eine Benutzerschnittstelle aufweist, über die ein Benutzer die geforderte Heizleistung direkt oder indirekt einstellen oder beeinflussen kann. Die Steuereinrichtung kann über Ausgänge mit der Schalteinrichtung und/oder der Pulsweitenmodulationseinrichtung verbunden sein. Insbesondere kann die Steuereinrichtung dazu ausgebildet sein, die Schalteinrichtung oder Schaltelemente der Schalteinrichtung durch Schaltsignale anzusteuern. Es kann vorgesehen sein, dass die Steuereinrichtung die Pulsweitenmodulationseinrichtung durch entsprechende Pulssteuersignale ansteuert. Die Steuereinrichtung kann dazu eingerichtet sein, die Schalteinrichtung und/oder die Pulsweitenmodulationseinrichtung basierend auf einem Spannungswert einer Versorgungsspannung und/oder einer geforderten Heizleistung der elektrischen Heizung anzusteuern. Somit kann die elektrische Heizung auf unterschiedliche Werte der Versorgungsspannung gut reagieren und auch bei unterschiedlichen Werten der Heizspannung oder der Versorgungsspannung effizient und genau gesteuert werden. Insbesondere kann es zweckmäßig sein, wenn die Steuereinrichtung dazu ausgelegt ist, die Schalteinrichtung für einen Heizmodus anzusteuern, der bei einer bestimmten geforderten Heizleistung und/oder gegebener Versorgungsspannung einen Betrieb mit möglichst hoher Pulsweitenmodulation ermöglicht, also möglichst hohem Heizanteil während einer Periode. Dies kann erreicht werden, indem die Heizung oder die Schalteinrichtung in einen Heizmodus geschaltet wird, in dem der Gesamtheizwiderstand bei gegebener Versorgungsspannung der höchste einstellbare Gesamtwiderstand ist, bei dem sich die geforderte Heizleistung bereitstellen lässt. Somit kann ein möglichst hoher Anteil einer Pulsperiode zum Heizen verwendet werden. Die Steuereinrichtung kann dazu eingerichtet sein, mit einem oder mehreren Sensoren zu kommunizieren. Es kann zweckmäßig sein, wenn die Steuereinrichtung an einen Spannungssensor angeschlossen ist. Der Spannungssensor kann zur Messung der Heizspannung ausgebildet sein. Es ist vorstellbar, dass der Spannungssensor ein Spannungssignal an die Steuereinrichtung zu übertragen vermag, welches die gemessene Spannung betrifft. Insbesondere kann vorgesehen sein, dass die Steuereinrichtung es vermag, geeignete Schalt- und/oder Steuersignale an die Schalteinrichtung und/oder die Pulsweitenmodulationseinrichtung zu übertragen.

Insbesondere kann vorgesehen sein, dass die Steuereinrichtung dazu ausgelegt ist, die Schalteinrichtung zu einem Betrieb der elektrischen Heizung im ersten Heizmodus anzusteuern, wenn ein Spannungswert einer Versorgungsspannung der elektrischen Heizung zwischen einem ersten Grenzwert und einem zweiten Grenzwert liegt, der unterhalb des ersten Grenzwertes liegt. Der erste Grenzwert kann beispielsweise ein Nominalwert einer Versorgungsspannung sein, oder um einen geeigneten Wert darüber liegen. Insbesondere kann der erste Grenzwert etwa 1%, 5%, 10%, 15% oder 20% über dem Nominalwert liegen. In diesem Fall entspricht der erste Heizmodus im Wesentlichen einem Nominalbetriebsmodus, in dem sich die Versorgungsspannung im Bereich des Nominalwertes bewegt.

Die Steuereinrichtung kann dazu ausgelegt sein, die Schalteinrichtung zu einem Betrieb der elektrischen Heizung im zweiten Heizmodus anzusteuern, wenn ein Spannungswert einer Versorgungsspannung der elektrischen Heizung unterhalb eines dritten Grenzwertes liegt. Der dritte Grenzwert kann insbesondere kleiner oder gleich dem zweiten Grenzwert sein. Somit kann bei einer hohen Versorgungsspannung die Heizung im ersten Heizmodus betrieben werden, bei dem ein hoher Gesamtheizwiderstand vorliegt, da die erste Widerstandsheizeinrichtung und die zweite Widerstandsheizeinrichtung elektrisch seriell geschaltet sind. Somit kann eine Pulsweitenmodulation derart durchgeführt werden, dass über eine möglichst lange Zeit einer Pulsperiode tatsächlich ein Heizstrom fließt. Bei einer gleichen geforderten Leistung und bei niedrigerer Versorgungsspannung kann die elektrische Heizung zu einem Betrieb im zweiten Heizmodus geschaltet sein, in welchem ein niedrigerer Gesamtheizwiderstand vorliegt.

Es kann zweckmäßig sein, wenn die Steuereinrichtung dazu ausgelegt ist, die Schalteinrichtung zu einem Betrieb der elektrischen Heizung in einen dritten Heizmodus anzusteuern, wenn ein Spannungswert einer Versorgungsspannung der elektrischen Heizung zwischen dem dritten Grenzwert und einem vierten Grenzwert liegt, der größer ist als der dritte Grenzwert. Der vierte Grenzwert kann dabei insbesondere kleiner als ein zweiter Grenzwert sein, wie er oben erwähnt wird. Somit ergibt sich zwischen einem Betrieb mit parallel geschalteten Widerstandsheizeinrichtungen und seriell geschalteten Widerstandsheizeinrichtungen ein Heizmodus, bei dem nur eine der Widerstandsheizeinrichtungen zum Heizen verwendet wird. Dies bietet ein noch breiteres Spektrum an Betriebsmöglichkeiten. Selbstverständlich kann vorgesehen sein, dass die Steuereinrichtung dazu ausgelegt ist, die Schalteinrichtung zu einem Betrieb der elektrischen Heizung in einen vierten Heizmodus zu schalten, wenn ein Spannungswert einer Versorgungsspannung der elektrischen Heizung zwischen dem vierten Grenzwert und einem fünften Grenzwert liegt, der größer ist als der vierte Grenzwert. Dies kann besonders zweckmäßig sein, wenn sich die Widerstandswerte der ersten Widerstandsheizeinrichtung und der zweiten Widerstandsheizeinrichtung voneinander unterscheiden. In diesem Zusammenhang kann vorgesehen sein, im vierten Heizmodus die Widerstandsheizeinrichtung mit dem höheren Widerstandswert zum Heizen zu verwenden oder zu schalten, während im dritten Heizmodus die Widerstandsheizeinrichtung mit dem niedrigeren Heizwiderstand zum Heizen verwendet oder geschaltet wird.

Insbesondere ist ein Fahrzeug mit einer elektrischen Heizung vorstellbar, wie sie hierin beschrieben ist. Dabei kann eine Versorgungsspannung der elektrischen Heizung durch ein Bordnetz des Fahrzeugs bereitgestellt sein. Das Bordnetz kann eine Versorgungsspannung mit einem der oben erwähnten Nominalwerte bereitstellen. Der Wert der Versorgungsspannung kann je nach Betriebszustand und/oder Art des Fahrzeugs beispielsweise in einem Bereich zwischen 0V, 100V, 150V, 200V, 250V und dem Nominalwert liegen. Insbesondere kann das Fahrzeug ein Elektro-Fahrzeug sein.

Ferner wird ein Verfahren zum Steuern einer elektrischen Heizung beschrieben, wobei es sich bei der elektrischen Heizung um eine der hierin beschriebenen elektrischen Heizungen handeln kann. Für einen Heizbetrieb werden die erste Widerstandsheizeinrichtung und die zweite Widerstandsheizeinrichtung wahlweise in einen ersten Heizmodus, für welchen die erste Widerstandsheizeinrichtung und die zweite Widerstandsheizeinrichtung elektrisch seriell geschaltet werden, oder in einen zweiten Heizmodus geschaltet, für welchen die erste Widerstandsheizeinrichtung und die zweite Widerstandsheizeinrichtung elektrisch parallel geschaltet werden. Es kann vorgesehen sein, dass für einen Heizbetrieb die erste Widerstandsheizeinrichtung und die zweite Widerstandsheizeinrichtung in einen dritten Heizmodus geschaltet werden, in welchem die erste Widerstandsheizeinrichtung oder die zweite Widerstandsheizeinrichtung allein betrieben werden. Insbesondere kann vorgesehen sein, dass die im dritten Heizmodus nicht betriebene Widerstandsheizeinrichtung für diesen Heizmodus abgeschaltet ist. Es kann zweckmäßig sein, für einen dritten Heizmodus die erste Widerstandsheizeinrichtung für einen Alleinbetrieb zu schalten und für einen vierten Heizmodus die zweite Widerstandsheizeinrichtung für einen Alleinbetrieb zu schalten. Das Schalten der Widerstandsheizeinrichtungen für den entsprechenden Heizmodus kann durch die Schalteinrichtung erfolgen. Im ersten Heizmodus und/oder im zweiten Heizmodus können die erste Widerstandsheizeinrichtung und die zweite Widerstandsheizeinrichtung mit einer gemeinsamen Stromquelle verbunden werden. Es kann vorgesehen sein, dass die Schalteinrichtung zum Schalten der Heizmodi durch eine Steuereinrichtung angesteuert wird. Die Steuereinrichtung kann mit einer übergeordneten Steuereinrichtung kommunizieren und/oder als eine gemeinsame Steuereinrichtung ausgebildet sein, die neben der elektrischen Heizung auch andere Einrichtungen steuert. Die Steuereinrichtung kann mit einer Einstelleinrichtung zum Einstellen einer geforderten Heizleistung verbunden werden und mit dieser kommunizieren. Die Steuereinrichtung kann die Schalteinrichtung und/oder die Pulsweitenmodulationseinrichtung basierend auf einem Spannungswert einer Versorgungsspannung und/oder einer geforderten Heizleistung der elektrischen Heizung steuern. Insbesondere kann es zweckmäßig sein, wenn die Steuereinrichtung die Schalteinrichtung für einen Heizmodus ansteuert, der bei einer bestimmten geforderten Heizleistung und/oder gegebener Versorgungsspannung einen Betrieb mit möglichst hoher Pulsweitenmodulation ermöglicht, also möglichst hohem Heizanteil während einer Periode. Dies kann erreicht werden, indem die Heizung oder die Schalteinrichtung in einen Heizmodus geschaltet wird, in dem der Gesamtheizwiderstand bei gegebener Versorgungsspannung der höchste einstellbare Gesamtwiderstand ist, bei dem sich die geforderte Heizleistung bereitstellen lässt. Die Steuereinrichtung kann mit einem oder mehreren Sensoren kommunizieren. Es kann zweckmäßig sein, wenn die Steuereinrichtung an einen Spannungssensor angeschlossen wird. Der Spannungssensor kann die Heizspannung messen. Es ist vorstellbar, dass der Spannungssensor ein Spannungssignal an die Steuereinrichtung überträgt, welches die gemessene Spannung betrifft. Die Steuereinrichtung kann die Schalteinrichtung basierend auf Signalen steuern, die sie von dem oder den Sensoren, insbesondere einem Spannungssensor, und/oder der Einstelleinrichtung empfängt. Es kann vorgesehen sein, dass die Steuereinrichtung die Schalteinrichtung zu einem Betrieb der elektrischen Heizung im ersten Heizmodus ansteuert, wenn ein Spannungswert einer Versorgungsspannung der elektrischen Heizung zwischen einem ersten Grenzwert und einem zweiten Grenzwert liegt, der unterhalb des ersten Grenzwertes liegt. Die Steuereinrichtung kann die Schalteinrichtung zu einem Betrieb der elektrischen Heizung im zweiten Heizmodus ansteuern, wenn ein Spannungswert einer Versorgungsspannung der elektrischen Heizung unterhalb eines dritten Grenzwertes liegt. Der dritte Grenzwert kann insbesondere kleiner oder gleich dem zweiten Grenzwert sein. Eine Pulsweitenmodulation kann entsprechend dem Heizmodus, in welchem die Heizung betrieben wird, derart durchgeführt werden, dass über eine möglichst lange Zeit einer Pulsperiode tatsächlich ein Heizstrom fließt. Bei einer gleichen geforderten Leistung und bei niedrigerer Versorgungsspannung kann die elektrische Heizung zu einem Betrieb im zweiten Heizmodus geschaltet werden, in welchem ein niedrigerer Gesamtheizwiderstand vorliegt, um trotz der niedrigeren Versorgungsspannung die geforderte Heizleistung bieten zu können. Es kann zweckmäßig sein, wenn die Steuereinrichtung die Schalteinrichtung zu einem Betrieb der elektrischen Heizung in einen dritten Heizmodus ansteuert, wenn ein Spannungswert einer Versorgungsspannung der elektrischen Heizung zwischen dem dritten Grenzwert und einem vierten Grenzwert liegt, der größer ist als der dritte Grenzwert. Der vierte Grenzwert kann dabei insbesondere kleiner als ein zweiter Grenzwert sein, wie er oben erwähnt wird. Es kann vorgesehen sein, dass die Steuereinrichtung die Schalteinrichtung zu einem Betrieb der elektrischen Heizung in einen vierten Heizmodus ansteuert, wenn ein Spannungswert einer Versorgungsspannung der elektrischen Heizung zwischen dem vierten Grenzwert und einem fünften Grenzwert liegt, der größer ist als der vierte Grenzwert. Dies kann besonders zweckmäßig sein, wenn sich die Widerstandswerte der ersten Widerstandsheizeinrichtung und der zweiten Widerstandsheizeinrichtung voneinander unterscheiden. In diesem Zusammenhang kann vorgesehen sein, die Widerstandsheizeinrichtung mit dem höheren Widerstandswert im vierten Heizmodus zum Heizen zu verwenden oder zu schalten, während die Widerstandsheizeinrichtung mit dem niedrigeren Heizwiderstand im dritten Heizmodus zum Heizen verwendet oder geschaltet wird. Für die Grenzwerte und Spannungswerte gilt das mit Bezug auf die elektrische Heizung ausgeführte.

Die Erfindung wird nun mit Bezug auf die begleitenden Zeichnungen anhand bevorzugter Ausführungsformen beispielhaft erläutert.

Es zeigen:
- Figur 1: eine schematische Darstellung einer elektrischen Heizung mit einer Relaisschaltung;
- Figur 2: eine schematische Darstellung einer elektrische Heizung mit einer Quasi-Vollbrücke;
- Figur 3: ein Diagramm mit unterschiedlich gepulsten Heizströmen.

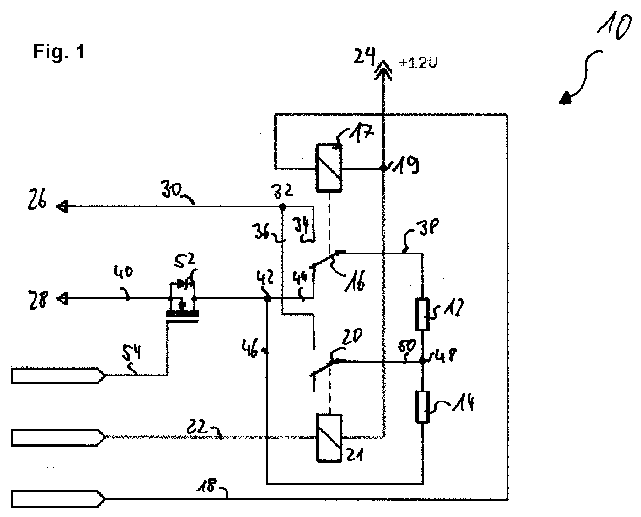

In Figur 1 ist schematisch eine elektrische Heizung 10 gezeigt. Die elektrische Heizung 10 weist einen ersten Heizwiderstand 12 und einen zweiten Heizwiderstand 14 auf, die in diesem Beispiel als erste Widerstandsheizeinrichtung und zweite Widerstandsheizeinrichtung dienen. Es ist ein erster Schalter 16 vorgesehen, der über eine Spule 17 zwischen einem "An"-Zustand und einem "Aus"-Zustand umgeschaltet werden kann. Die Spule 17 kann über eine erste Schaltleitung 18 bestromt werden. Der erste Schalter 16 ist als Relaisschalter ausgebildet. In Figur 1 ist der Schalter im "Aus"-Zustand gezeigt. Ferner ist ein zweiter Schalter 20 vorgesehen, der über eine Spule 21 zwischen einem "An"-Zustand und einem "Aus"-Zustand umgeschaltet werden kann. In Figur 1 ist der Schalter 20, der als Relaisschalter ausgebildet ist, im "Aus"-Zustand dargestellt. Über eine zweite Schaltleitung 22 kann die Spule 21 bestromt werden, um den Schalter 20 umzuschalten. Der erste Schalter 16, der zweite Schalter 20 und die zugehörigen Spulen 17, 21 können als Elemente einer Schalteinrichtung angesehen werden. Die Schaltleitungen 18 und 22 sind an einen gemeinsamen Pol einer Schaltspannungsversorgung 24 angeschlossen. Dazu ist ein Schaltknoten 19 der Schaltleitungen 18 und 22 vorgesehen, der über die Schaltspulen 17, 21 an die Schaltleitungen 18 und 22 angeschlossen ist. Eine Schaltspannungsversorgung kann in diesem Beispiel ein Schaltpotential von 12 V für die Schaltleitungen 18, 22 bereitstellen. Bei Anlegen einer entsprechenden Schaltspannung über die Schaltleitung 18 kann die Spule 17 bestromt werden, so dass der erste Schalter 16 in den "An"-Zustand geschaltet wird. Analog kann durch Anlegen eines Spannungssignals auf die Schaltleitung 22 die Spule 21 bestromt werden, um den Schalter 20 umzuschalten.

Ferner sind Pole 26, 28 einer Spannungsversorgung für die elektrische Heizung 10 vorgesehen, über die eine Heizspannung bereitgestellt ist. Eine mit dem ersten Pol 26 der Spannungsversorgung verbundene Versorgungsleitung 30 verzweigt an einem Versorgungsknoten 32 in einen ersten Versorgungszweig 34 und einen zweiten Versorgungszweig 36. Der erste Versorgungszweig 34 ist mit dem ersten Schalter 16 verbunden. Der zweite Versorgungszweig 36 ist mit dem zweiten Schalter 20 verbunden. Über den ersten Schalter 16 kann der erste Versorgungszweig 34 mit einer ersten Heizleitung 38 verbunden werden, in welcher der erste Heizwiderstand 12 angeordnet ist. Ferner ist eine zweite Versorgungsleitung 40 vorgesehen, die an den zweiten Pol 28 der Spannungsversorgung angeschlossen ist. Die zweite Versorgungsleitung 40 verzweigt an einem zweiten Versorgungsknoten 42 in einen dritten Versorgungszweig 44 und einen vierten Versorgungszweig 46. Der dritte Versorgungszweig 44 der zweiten Versorgungsleitung 40 ist an den ersten Schalter 16 angeschlossen. Der erste Schalter 16 ist derart angeordnet, dass er im "Aus"-Zustand die Heizleitung 38 mit dem dritten Versorgungszweig 44 der zweiten Versorgungsleitung 40 verbindet. Im "An"-Zustand verbindet der erste Schalter 16 die Heizleitung 38 mit dem ersten Versorgungszweig 34 der ersten Versorgungsleitung 30. Der vierte Versorgungszweig 46 der zweiten Versorgungsleitung 40 ist über einen Heizknoten 48 mit der ersten Heizleitung 38 verbunden. Zwischen dem Heizknoten 48 und dem zweiten Versorgungsknoten 42 ist im vierten Versorgungszweig 46 der zweite Heizwiderstand 14 geschaltet. Der erste Heizwiderstand 12 ist zwischen dem Heizknoten 48 und dem ersten Schalter 16 in die Heizleitung 38 geschaltet. Der zweite Schalter 20 ist über eine Relaisleitung 50 an den Heizknoten 48 angeschlossen. Im "An"-Zustand verbindet der zweite Schalter 20 den zweiten Versorgungszweig 36 der ersten Versorgungsleitung 30 mit dem Heizknoten 48. Im "Aus"-Zustand wird über den zweiten Schalter 20 keine leitende Verbindung zwischen dem Heizknoten 48 und einer der Versorgungsleitungen 30, 40 hergestellt. Zwischen dem zweiten Versorgungsknoten 42 der zweiten Versorgungsleitung 40 und dem zweiten Pol der Versorgungsspannung 28 ist ferner eine Pulsweitenmodulationseinrichtung 52 vorgesehen. Die Pulsweitenmodulationseinrichtung 52 ist dabei als Transistor ausgebildet, in diesem Beispiel als ein IGB-Transistor. Über eine Steuerleitung 54 wird ein Pulsweitenmodulationssignal oder Pulssteuersignal als Steuersignal an die Pulsweitenmodulationseinrichtung 52 gegeben. Insbesondere können Eingang und Ausgang (Kollektor und Emitter) der Pulsweitenmodulationseinrichtung 52 derart angeordnet sein, dass der Eingang an den zweiten Versorgungsknoten 42 und der Ausgang an den Pol 28 angeschlossen ist. Der Steuereingang (Gate) der Pulsweitenmodulationseinrichtung 52 ist an die Steuerleitung 54 angeschlossen. Wird durch das Pulsweitenmodulationssignal oder Pulssteuersignal die Pulsweitenmodulationseinrichtung 52 auf Durchlass geschaltet, kann grundsätzlich ein Heizstrom zwischen den Polen 26, 28 der Spannungsversorgung fließen. Während der Zeiten, in denen kein Signal auf der Steuerleitung 54 anliegt, weil beispielsweise das Signal einen periodischen Nulldurchgang durchläuft oder überhaupt kein Signal anliegt, kann entsprechend kein Strom zwischen den Polen 26, 28 der Versorgungsspannung fließen. Somit wird über die Pulsweitenmodulationseinrichtung 52 ein erster Abschaltpfad der elektrischen Heizung 10 ermöglicht, denn ohne das Anlegen eines Pulsweitenmodulationssignals über die Steuerleitung 54 ist die elektrische Heizung 10 somit abgeschaltet. Das Pulssteuersignal kann ein Rechtecksignal sein. Die mit den Schaltleitungen 18, 22 und der Steuerleitung 54 verbundenen Pfeile stellen Ausgänge einer Steuereinrichtung dar, welche es vermag, Schaltsignale oder Pulssteuersignale auf die Schaltleitungen 18, 22 oder die Steuerleitung 54 zu legen. Die Steuereinrichtung steuert die Schalteinrichtung und/oder die Pulsweitenmodulationseinrichtung 52 basierend auf einem Spannungswert der über die Pole 26, 28 bereitgestellten Versorgungsspannung und/oder einer geforderten Heizleistung der elektrischen Heizung an. Dazu gibt sie über ihre Ausgänge entsprechende Schaltsignale und/oder Steuersignale aus.

Die Schalteinrichtung der elektrischen Heizung 10, die in diesem Fall die Schalter 16 und 20 aufweist, kann wie folgt geschaltet werden:
Sind der erste Schalter 16 und der zweite Schalter 20 beide im "Aus"-Zustand, ist keine leitende Verbindung zwischen dem ersten Pol 26 und dem zweiten Pol 28 der Spannungsversorgung möglich. Somit ergibt sich über die Schalter 16, 20 ein zweiter Abschaltpfad, der vom ersten Abschaltpfad unabhängig schaltbar ist.

Befindet sich der erste Schalter 16 im "Aus"-Zustand, der zweite Schalter 20 aber im "An"-Zustand, sind der erste Heizwiderstand 12 und der zweite Heizwiderstand 14 parallel geschaltet. Der erste Versorgungsknoten 32 ist über den zweiten Schalter 20, den Heizknoten 48, den zweiten Heizwiderstand 14 und über den zweiten Versorgungsknoten 42 mit der zweiten Versorgungsleitung 40 stromleitend verbunden. Ferner ergibt sich über den zweiten Versorgungszweig 36, den zweiten Schalter 20, den Heizknoten 48, den Heizwiderstand 12 in der Heizleitung 38 und den Schalter 16 eine dazu parallele stromleitende Verbindung der ersten Versorgungsleitung 30 mit der zweiten Versorgungsleitung 40. Denn der Schalter 16 verbindet im "Aus"-Zustand die Heizleitung 38 mit dem dritten Versorgungszweig 44 der zweiten Versorgungsleitung 40. Somit können der erste Heizwiderstand 12 und der zweite Heizwiderstand 14 parallel betrieben und nach Maßgabe der Pulsweitenmodulationseinrichtung 52, die über die Steuerleitung 54 angesteuert wird, mit Heizstrom versorgt werden.

Befindet sich der erste Schalter 16 im "An"-Zustand und der zweite Schalter 20 im "Aus"-Zustand, ergibt sich über die erste Versorgungsleitung 30, den ersten Versorgungszweig 34, den "An" geschalteten Schalter 16, die Heizleitung 38 mit dem ersten Heizwiderstand 12 über den Heizknoten 48, den vierten Versorgungszweig 46 mit dem zweiten Heizwidertand 14 und den zweiten Versorgungsknoten 42 eine leitende Verbindung zwischen dem ersten Pol 26 der Spannungsversorgung mit dem zweiten Pol 28 der Spannungsversorgung. Somit werden der erste Heizwiderstand 12 und der zweite Heizwiderstand 14 seriell mit Heizstrom versorgt und in einer Serienschaltung betrieben.

Befindet sich der erste Schalter 16 und der zweite Schalter 20 jeweils im "An"-Zustand, ergibt sich von der ersten Versorgungsleitung 30 über den ersten Versorgungsknoten 32, den zweiten Versorgungszweig 36, den zweiten Schalter 20, die Relaisleitung 50, den Heizknoten 48, den vierten Versorgungszweig 46 mit dem zweiten Heizwiderstand 14 und den zweiten Versorgungsknoten 42 eine Verbindung zur zweiten Versorgungsleitung 40. Somit kann der zweite Heizwiderstand 14 mit Strom versorgt werden. Der erste Heizwiderstand 12 in der Heizleitung 38 ist sowohl über den zweiten Schalter 20 und den zweiten Versorgungszweig 36 als auch über den ersten Schalter 16 und den ersten Versorgungszweig 34 an den ersten Versorgungsknoten 32 angeschlossen, so dass über dem ersten Heizwiderstand 12 kein Spannungsabfall vorliegt. Daher wird in diesem Fall abhängig von der Ansteuerung der Pulsweitenmodulationseinrichtung 52 nur der zweite Heizwiderstand 14 mit Strom versorgt und damit zum Heizen betrieben.

In diesem Beispiel ergeben sich geringe Schaltverluste, da lediglich die Pulsweitenmodulationseinrichtung 52 als Halbleiterstrecke ausgebildet ist, die eine nennenswerte Schaltlast erfordert. Die Schalter 16, 20 können als Relais im Wesentlichen lastfrei umgeschaltet werden. Darüber hinaus kann die Schalteinrichtung derart ausgelegt sein, dass sich die Relais bei defekter Steuerung, etwa dann, wenn die Relais stromlos werden, jeweils im "Aus"-Zustand befinden, wodurch die Heizwiderstände automatisch von der Versorgungsspannung getrennt sind.

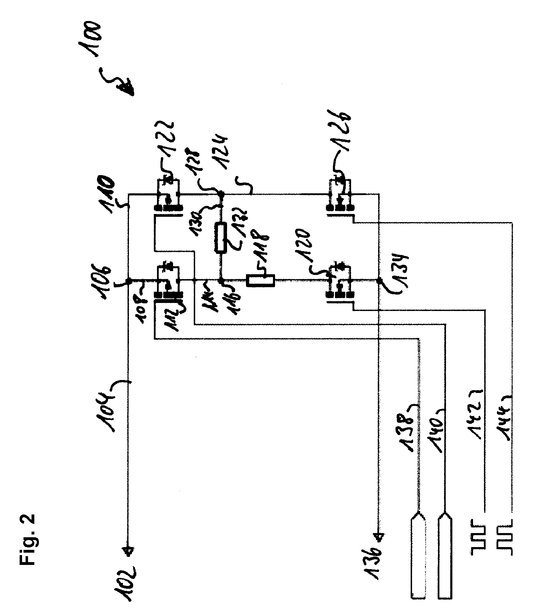

Figur 2 zeigt eine schematische Darstellung einer Heizung 100 mit einer Quasi-Vollbrücke. Die elektrische Heizung 100 weist eine mit einem ersten Pol 102 einer Spannungsversorgung verbundene erste Versorgungsleitung 104 auf. An einem ersten Versorgungsknoten 106 verzweigt die erste Versorgungsleitung 102 in einen ersten Versorgungszweig 108 und in einen zweiten Versorgungszweig 110. Der erste Versorgungszweig 108 ist an einen hochseitigen ersten Schalttransistor 112 angeschlossen. Eine erste Heizleitung 114 verbindet den als IGB-Transistor ausgelegten hochseitigen ersten Schalttransistor 112 mit einem Heizknoten 116. Insbesondere können der Eingang (Kollektor) des ersten Schaltransistors 112 an den ersten Versorgungszweig 108 und der Ausgang (Emitter) an die erste Heizleitung 114 angeschlossen sein. An den Heizknoten 116 sind hintereinander ein erster Heizwiderstand 118 und ein Eingang (Kollektor) eines ersten Pulsweitenmodulators 120 angeschlossen. Dieser niederseitige Pulsweitenmodulator 120 ist als IGB-Transistor ausgelegt. Der zweite Versorgungszweig 110 ist an den Eingang eines hochseitigen zweiten Schalttransistors 122 angeschlossen, der ebenfalls als IGB-Transistor ausgebildet ist. Der Ausgang des zweiten Schalttransistors 122 ist über eine Leitung 124 mit dem Eingang eines zweiten Pulsweitenmodulators 126 verbunden. In der Leitung 124 zwischen dem zweiten Schalttransistor 122 und dem zweiten Pulsweitenmodulator 126 ist ein zweiter Heizknoten 128 vorgesehen. Vom zweiten Heizknoten 128 zweigt eine Heizleitung 130 ab, in die ein zweiter Heizwiderstand 132 geschaltet ist. Die Heizleitung 130 ist derart an den ersten Heizknoten 114 angeschlossen, dass der zweite Heizwiderstand 132 zwischen dem ersten Heizknoten 114 und dem zweiten Heizknoten 128 geschaltet ist. Die Ausgänge des ersten Pulsweitenmodulators 120 und des zweiten Pulsweitenmodulators 126 sind über Leitungen an einen gemeinsamen Ausgangsknoten 134 angeschlossen. Der Ausgangsknoten 134 wiederum ist mit einem zweiten Pol 136 der Spannungsversorgung verbunden. Somit sind die Ausgänge der Pulsweitenmodulatoren 120, 126 an den zweiten Pol 136 der Spannungsversorgung angeschlossen. Eine erste Schaltleitung 138 ist an den Steuereingang (Gate) des ersten Schalttransistors 112 angeschlossen, um diesen anzusteuern. Auf ähnliche Weise ist eine zweite Schaltleitung 140 an den Steuereingang des zweiten Schalttransistors 122 angeschlossen, um diesen anzusteuern. Über die Schaltleitungen 138, 140 können entsprechende Schaltsignale an die Schalttransistoren 112, 122 gegeben werden, um einen Stromdurchfluss von dem ersten Pol 102 der Spannungsversorgung über die Ein- und Ausgänge der Schalttransistoren 112, 122 zu ermöglichen. Eine erste Steuerleitung 142 ist an den Steuereingang des niederseitigen ersten Pulsweitenmodulators 120 angeschlossen. Nach Maßgabe eines pulsweitenmodulierten Signals kann über die erste Steuerleitung 142 der erste Pulsweitenmodulator 120 an- beziehungsweise ausgeschaltet werden. Eine zweite Steuerleitung 144 ist an den zweiten Pulsweitenmodulator 126 angeschlossen. Ähnlich wie der erste Pulsweitenmodulator 120 kann der zweite Pulsweitenmodulator 126 nach Maßgabe eines auf die zweite Steuerleitung 144 gelegten Signals an- oder ausgeschaltet werden. Der erste Pulsweitenmodulator 120 und der zweite Pulsweitenmodulator 126 sind separat und unabhängig voneinander ansteuerbar. Sie können als Elemente einer Pulsweitenmodulationseinrichtung angesehen werden. Insbesondere kann vorgesehen sein, dass der erste Pulsweitenmodulator 120 und der zweite Pulsweitenmodulator 126 durch um 180°-phasenverschobene pulsweitenmodulierte rechteckförmige Signale angesteuert werden, wie dies in Figur 2 durch die Wellenformen der Signale angedeutet ist. Dadurch ergibt sich insgesamt ein verringerter Rippelstrom, wodurch das Bordnetz eine stabilere Strom- beziehungsweise Spannungsversorgung bereitstellt. Befinden sich beide Pulsweitenmodulationseinrichtungen 120, 126 nicht im "An"-Zustand, so kann zwischen dem ersten Pol 102 der Spannungsversorgung und dem zweiten Pol 136 der Spannungsversorgung kein Strom fließen. Somit ergibt sich ein erster Abschaltpfad durch die unabhängig schaltbaren Pulsweitenmodulatoren 120, 126. Insbesondere ist bei Ausfall der Steuersignale für die Pulsweitenmodulatoren sichergestellt, dass die Heizung nicht betrieben wird. Ähnlich wie im Zusammenhang mit der Figur 1 erwähnt, sind die Schaltleitungen 138, 140 und die Steuerleitungen 142, 144 mit Ausgängen einer nicht näher bezeichneten Steuereinrichtung verbunden, welche es vermag, Schaltsignale oder Pulssteuersignale auf die Schaltleitungen 138, 140 oder die Steuerleitungen 142, 144 zu legen. Die Steuereinrichtung steuert die Schalteinrichtung und/oder die Pulsweitenmodulationseinrichtung basierend auf einem Spannungswert der über die Pole 102, 136 bereitgestellten Versorgungsspannung und/oder einer geforderten Heizleistung der elektrischen Heizung an. Dazu gibt sie über ihre Ausgänge entsprechende Schaltsignale und/oder Steuersignale aus. In diesem Beispiel können die Schalttransistoren 112, 122 als Elemente einer Schalteinrichtung angesehen werden. Der Heizwiderstand 118 entspricht einer ersten Widerstandsheizeinrichtung und der Heizwiderstand 132 einer zweiten Widerstandsheizeinrichtung.

Befindet sich der hochseitige erste Schalttransistor 112 im "Aus"-Zustand und der hochseitige zweite Schalttransistor 122 befindet sich im "An"-Zustand, ist zweckmäßigerweise nur die erste Pulsweitenmodulationseinrichtung 120 "An" geschaltet. Dann ergibt sich ein Stromfluss vom ersten Pol 102 der Spannungsversorgung über den zweiten Versorgungszweig 110, den ersten Schalttransistor 122, den zweiten Heizknoten 128, die Heizleitung 130 mit dem zweiten Heizwiderstand 132, den ersten Heizknoten 114, den ersten Heizwiderstand 118 und den ersten Pulsweitenmodulator 120 zum Ausgangsknoten 134. Wenn der zweite Pulsweitenmodulator 126 in diesem Fall nicht angesteuert ist und im "Aus"-Zustand verbleibt, in welchem er keinen Strom leitet, sind der erste Heizwiderstand 118 und der zweite Heizwiderstand 132 bezüglich des Leitungspfades über den ersten Pulsweitenmodulator 120 in Serie geschaltet. Somit kann nach Maßgabe des an den ersten Pulsweitenmodulator 120 angelegten Steuersignals ein Heizstrom über die seriell geschalteten Heizwiderstände 118, 132 fließen. In diesem Zustand sollte ein Kurzschluss zwischen dem zweiten Schalttransistor 122 und dem zweiten Pulsweitenmodulator 126 vermieden werden, etwa indem die Steuereinrichtung den zweiten Pulsweitenmodulator 126 nicht in den "An"-Zustand versetzt.

In dem Fall, dass der erste Schalttransistor 112 in einen "An"-Zustand geschaltet ist und der zweite Schalttransistor 122 in den "Aus"-Zustand, ergeben sich je nach Ansteuerung der Pulsweitenmodulatoren 120, 126 verschiedene mögliche Strompfade. Wird nur der erste Pulsweitenmodulator 120 durch ein pulsweitenmoduliertes Steuersignal angesteuert, und der zweite Pulsweitenmodulator 126 bleibt ausgeschaltet, ergibt sich ein Strompfad vom ersten Pol 102 über die erste Versorgungsleitung 104, den ersten Versorgungsknoten 106, den ersten Schalttransistor 112, den ersten Heizknoten 114, den ersten Heizwiderstand 118 über den ersten Pulsweitenmodulator 120 zum Ausgangsknoten 134 und somit zum zweiten Pol 136 der Spannungsversorgung. Somit trägt nur der erste Heizwiderstand 118 zur Erwärmung bei. In dem Fall, dass die erste Pulsweitenmodulationseinrichtung 120 nicht angesteuert wird, aber dafür die zweite Pulsweitenmodulationseinrichtung 126, ergibt sich ein Leitungspfad, in dem nur der zweite Heizwiderstand 132 von Strom durchflossen wird, nicht aber der erste Heizwiderstand 118. Werden beide Pulsweitenmodulationseinrichtungen 120, 126 in einen "An"-Zustand gesteuert, werden der erste Heizwiderstand 118 und der zweite Heizwiderstand 132 im Wesentlichen parallel durchströmt. Eine Parallelschaltung der Heizwiderstände 118, 132 ergibt sich streng genommen allerdings nur für einen Fall, in dem die beiden Pulsweitenmodulationseinrichtungen 120, 126 gleichzeitig in einen "An"-Zustand geschaltet sind. Dies kann insbesondere der Fall sein, wenn die Signale zur Pulsweitenmodulierung der Pulsweitenmodulationseinrichtungen 120, 126 gleichphasig sind, oder eine hundertprozentige Pulsweitenmodulation vorliegt, in welcher sich ein Puls über eine vollständige Pulsperiode erstreckt. Für eine phasenverschobene Ansteuerung können der erste Heizwiderstand 118 und der zweite Heizwiderstand 132 abwechselnd von Strom durchflossen sein, wenn nämlich einer der Pulsweitenmodulatoren 120, 126 sich gerade durch ein pulsweitenmoduliertes Signal in einem "An"-Zustand befindet, und der andere Pulsweitenmodulator 126 sich in einem "Aus"-Zustand befindet. Dementsprechend liegt während solcher Zeiten keine Parallelschaltung im engeren Sinne vor.

Für das in Figur 2 gezeigte Beispiel ergibt sich durch die Möglichkeit, den ersten Schalttransistor 112 und den zweiten Schalttransistor 122 gleichzeitig in einen "Aus"-Zustand zu schalten, ein separater zweiter Abschaltpfad, der zum ersten Abschaltpfad redundant ist und unabhängig von diesem geschaltet werden kann. Werden beide Schalttransistoren 112 und 122 in den "An"-Zustand geschaltet, können sich abhängig von der Ansteuerung der Transistoren unterschiedliche Strompfade ergeben. Auch in diesem Fall sollte ein Kurzschluss zwischen dem Schalttransistor 122 und dem Pulsweitenmodulator 126 vermieden werden, etwa durch geeignete Ansteuerung durch die Steuereinrichtung. Es kann insbesondere generell vorgesehen sein, dass ein gleichzeitiger "An"-Zustand des zweiten Schalttransistors 122 und des zweiten Pulsweitenmodulators 126 durch die Steuereinrichtung vermieden oder untersagt wird. Wird der zweite Pulsweitenmodulator 126 im "Aus"-Zustand belassen, ergibt sich ein bevorzugter Strompfad über den ersten Heizwiderstand 118, der den Heizprozess dominiert.

Da der erste Schalttransistor 112 und der erste Pulsweitenmodulator 120 im Gegensatz zum zweiten Schalttransistor 122 und dem zweiten Pulsweitenmodulator 126 nicht direkt miteinander verbunden sind, sondern der Heizwiderstand 118 dazwischen geschaltet ist, kann die in der Figur 2 gezeigte Schaltung als Quasi-Vollbrücke bezeichnet werden. Sie kann als reine Halbleiterlösung kompakt hergestellt werden. Es kann vorgesehen sein, die vier Halbleiter-Schalter, also beispielsweise den ersten Schalttransistor 112, den zweiten Schalttransistor 122 und den ersten und zweiten Pulsweitenmodulator 120, 126 als Brückenmodul zu realisieren. In diesem Beispiel werden die Transistoren als IGB-Transistoren realisiert. Es ist jedoch möglich, jegliche geeignete Art von Transistoren zu verwenden.

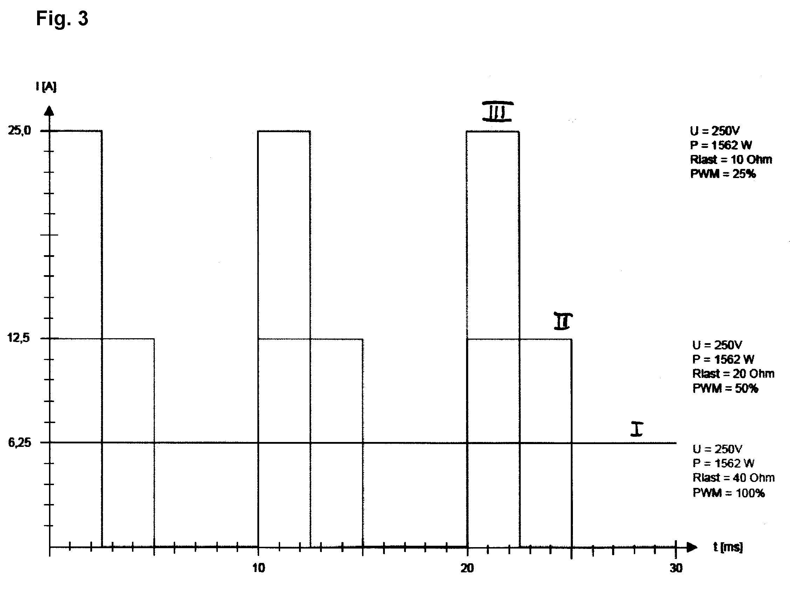

Figur 3 zeigt eine Darstellung einer möglichen Pulsstromaufnahme bei unterschiedlichen Heizwiderstandswerten einer Schaltung. Es wird ein von der Spannungsversorgung bereitgestellter Heizstrom mit Stromstärke I in Ampere A in Abhängigkeit von der Zeit t in Millisekunden ms gezeigt. U bezeichnet die angelegte Heizspannung, P die Heizleistung, Rlast den Gesamtheizwiderstand und PWM das Maß der Pulsweitenmodulation. Für die gezeigten Kurven I, II und III beträgt die Leistungsaufnahme der Heizung jeweils 1562 Watt. Dies entspricht der geforderten Heizleistung der Heizung. Allgemein lässt sich die Heizleistungsaufnahme P der Heizung darstellen als: 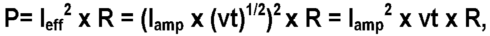 wobei R den Gesamtwiderstand bezeichnet, I_{eff} die effektive, durch die Pulsmodulation modifizierte Stromstärke des Heizstroms, Iₐₘₚ die maximale Stromstärke des Heizstroms und vt den Tastgrad der Pulsweitenmodulation, also das Verhältnis der Zeit, in der während einer Pulsperiode ein Heizstrom fließt, zur Dauer der Pulsperiode. Somit entsprechen die höchsten Stromstärkewerte einer Kurve in Figur 3 jeweils Iₐₘₚ. In diesem Beispiel werden Heizströme mit rechteckiger Wellenform erzeugt.

Bei der Heizung kann es sich um eine der in Figur 1 oder Figur 2 gezeigten Heizungen handeln. Der erste Heizwiderstand und der zweite Heizwiderstand wurden jeweils mit einem Widerstand von etwa 20 Ohm ausgelegt. Für eine Parallelschaltung der Heizwiderstände ergibt sich somit eine Gesamtlast von etwa Rlast=10 Ohm. Für eine Schaltung mit Einzellast, bei der nur ein Heizwiderstand mit Heizstrom versorgt wird, ergibt sich ein Heizwiderstandswert von etwa Rlast=20 Ohm. Bei Serienschaltung der Heizwiderstände beträgt der Heizwiderstandswert etwa Rlast=40 Ohm. Für alle 3 Kurven wurde von einer Versorgungsspannung von U=250 V ausgegangen.

Die erste Kurve I entspricht dem ersten Heizmodus, also einer Serienschaltung der Heizwiderstände, was dem Fall in Figur 1 entspricht, in dem der erste Schalter 16 angeschaltet und der zweite Schalter 20 ausgeschaltet ist, oder dem Fall in Figur 2, in dem der erste Schalttransistor 112 ausgeschaltet und der zweite Schalttransistor 122 angeschaltet ist. In diesem Fall kann für die vorgegebene Leistung von P=1562 Weine Pulsweitenmodulation von 100% erreicht werden, so dass sich ein im Wesentlichen konstanter Strom ergibt. Die Stromstärke I des Heizstroms beträgt 6,25 A.

Wird in einem dritten Heizmodus nur einer der Heizwiderstände verwendet, was dem Fall in Figur 1 entspricht, in dem der erste Schalter 16 und der zweite Schalter 20 angeschaltet sind, oder dem Fall in Figur 2, in dem bei entsprechender Ansteuerung der Pulsweitenmodulationseinrichtung der erste Schalttransistor 112 angeschaltet und der zweite Schalttransistor 122 ausgeschaltet ist, beträgt der Gesamtheizwiderstand Rlast=20 Ohm. Die Pulsweitenmodulation beträgt 50 %, wodurch sich das in Kurve II zu erkennende periodisch gepulste Signal ergibt. Die während eines Pulses durch den ausgewählten Heizwiderstand strömende Stromstärke beträgt gemäß der obigen Formel 12,5 A.

Für die dritte Kurve III wird vom zweiten Heizmodus, also einer Parallelschaltung der Heizwiderstände ausgegangen. Entsprechend ergibt sich der niedrigste Gesamtheizwiderstand von 10 Ohm. Dies entspricht dem Fall in Figur 1, in dem der erste Schalter 16 ausgeschaltet und der zweite Schalter 20 angeschaltet ist, oder dem Fall in Figur 2, in dem bei entsprechender Ansteuerung der Pulsweitenmodulationseinrichtung der erste Schalttransistor 112 angeschaltet und der zweite Schalttransistor 122 ausgeschaltet ist. Die Pulsweitenmodulation beträgt lediglich 25 %, woraus sich eine nochmals erhöhte Stromstärke von 25,0 A ergibt.

Aus der Figur 3 ist ersichtlich, dass bei einer geforderten Heizleistung von P=1562 Weine Serienschaltung der Heizwiderstände wünschenswert ist. Denn somit lässt sich eine niedrige Stromstärke bei einem stabilen Signal (hoher Tastgrad) verwenden, wodurch sich Schaltbelastungen und Rippelstromeffekte am geringsten Auswirken. Gleichzeitig lässt sich in diesem Fall die Heizleistung präziser steuern als für die Kurven II und III, da die volle Breite der Pulsweitenmodulation ausgenutzt werden kann. Insbesondere ist zu berücksichtigen, dass sich eine Pulsweitenmodulation in der Regel ohne großen und kostenintensiven Aufwand nur auf etwa 1 % genau steuern lässt. Sollte also eine niedrigere Heizleistung als 1562W gefordert sein, kann für die Kurve I eine genauere Heizleistungssteuerung erfolgen als für die Kurven II und III. Sollte eine höhere Heizleistung verlangt werden, kann diese offensichtlich nicht durch Herunterfahren der Pulsweitenmodulation erreicht werden. Somit muss für eine höhere Heizleistung die Heizung derart geschaltet werden, dass die Heizwiderstände nicht mehr seriell geschaltet sind, also die Kurve I verlassen wird. Für geforderte Heizleistungen von bis zu etwa 3000 W wird vorzugsweise auf die Kurve II gewechselt, also nur einer der Heizwiderstände angesteuert. Für Heizleistungen über etwa 3000 W bis zu einer in diesem Fall vorgesehenen Maximalleistung von etwa 6000 W wird vorzugsweise die Parallelschaltung der Heizwiderstände im ersten Heizmodus verwendet, also auf Kurve III gewechselt.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Heizung
- 12: erster Heizwiderstand
- 14: zweiter Heizwiderstand
- 16: erster Schalter
- 17: Spule
- 18: erste Schaltleitung
- 19: Schaltknoten
- 20: zweiter Schalter
- 21: Spule
- 22: zweite Schaltleitung
- 24: Pol der Schaltspannungsversorgung
- 26: Pol
- 28: Pol
- 30: erste Versorgungsleitung
- 32: erster Versorgungsknoten
- 34: erster Versorgungszweig
- 36: zweiter Versorgungszweig
- 38: Heizleitung
- 40: zweite Versorgungsleitung
- 42: zweiter Versorgungsknoten
- 44: dritter Versorgungszweig
- 46: vierter Versorgungszweig
- 48: Heizknoten
- 50: Relaisleitung
- 52: Pulsweitenmodulationseinrichtung
- 54: Steuerleitung
- 100: elektrische Heizung
- 102: Pol
- 104: erste Versorgungsleitung
- 106: Versorgungsknoten
- 108: erster Versorgungszweig
- 110: zweiter Versorgungszweig
- 112: erster Schalttransistor
- 114: Heizleitung
- 116: erster Heizknoten
- 118: erster Heizwiderstand
- 120: erster Pulsweitenmodulator
- 122: zweiter Schalttransistor
- 124: Leitung
- 126: zweiter Pulsweitenmodulator
- 128: zweiter Heizknoten
- 130: Heizleitung
- 132: zweiter Heizwiderstand
- 134: Ausgangsknoten
- 136: Pol
- 138: erste Schaltleitung
- 140: zweite Schaltleitung
- 142: erste Steuerleitung
- 144: zweite Steuerleitung

## Patentansprüche

1. Elektrische Heizung (10; 100) für ein Fahrzeug, mit:
mindestens einer ersten Widerstandsheizeinrichtung (12; 118) und einer zweiten Widerstandsheizeinrichtung (14; 132),
mindestens einer Pulsweitenmodulationseinrichtung (52; 120, 126), die es vermag, die erste Widerstandheizeinrichtung (12; 118) und/oder die zweite Widerstandsheizeinrichtung (814; 132) pulsweitenmoduliert zu betreiben,
sowie mindestens einer Schalteinrichtung (16, 17, 20, 21; 112, 122);
wobei die Schalteinrichtung (16, 17, 20, 21; 112, 122) es vermag, für einen Heizbetrieb die erste Widerstandsheizeinrichtung (12; 118) und die zweite Widerstandsheizeinrichtung (14; 132) wahlweise zwischen einem ersten Heizmodus, in welchem die erste Widerstandsheizeinrichtung (12; 118) und die zweite Widerstandsheizeinrichtung (14; 132) elektrisch seriell geschaltet sind, und einem zweiten Heizmodus umzuschalten, in welchem die erste Widerstandsheizeinrichtung (12; 118) und die zweite Widerstandsheizeinrichtung (14; 132) elektrisch parallel geschaltet sind,
wobei die elektrische Heizung (10; 100) eine Steuereinrichtung aufweist welche dazu eingerichtet ist, die Schalteinrichtung (16, 17, 20, 21; 112, 122) basierend auf einem Spannungswert einer Versorgungsspannung der elektrischen Heizung (10; 100) zu steuern.

2. Elektrische Heizung nach Anspruch 1, wobei die Schalteinrichtung (16, 17, 20, 21; 112, 122) es ferner vermag, für einen Heizbetrieb die erste Widerstandsheizeinrichtung (12; 118) und die zweite Widerstandheizeinrichtung (14; 132) in einen dritten Heizmodus zu schalten, in welchem die erste Widerstandsheizeinrichtung (12; 118) oder die zweite Widerstandsheizeinrichtung (14; 132) allein betrieben ist.

3. Elektrische Heizung nach Anspruch 1 oder 2, wobei die Schalteinrichtung (16, 17, 20, 21) als eine Relaisschaltung ausgebildet ist.

4. Elektrische Heizung nach Anspruch 1 oder 2, wobei die Schalteinrichtung (112, 122) als eine Quasi-Vollbrücke ausgebildet ist.

5. Elektrische Heizung nach einem der Ansprüche 1 bis 4, wobei der Heizwiderstandswert der ersten Widerstandsheizeinrichtung (12; 118) dem Heizwiderstandswert der zweiten Widerstandsheizeinrichtung (14; 132) im Wesentlichen gleich ist.

6. Elektrische Heizung nach einem der Ansprüche 1 bis 5, wobei im ersten Heizmodus und/oder im zweiten Heizmodus die erste Widerstandsheizeinrichtung (12; 118) und die zweite Widerstandsheizeinrichtung (14; 132) an eine gemeinsame Stromquelle (26, 28; 102, 136) angeschlossen sind.

7. Elektrische Heizung nach einem der Ansprüche 1 bis 6, wobei die Steuereinrichtung dazu eingerichtet ist, die Schalteinrichtung (16, 17, 20, 21; 112, 122) zusätzlich basierend auf einer geforderten Heizleistung der elektrischen Heizung (10; 100) und/oder die Pulsweitenmodulationseinrichtung (52; 120, 126) basierend auf einem Spannungswert einer Versorgungsspannung und/oder einer geforderten Heizleistung der elektrischen Heizung (10; 100) zu steuern.

8. Elektrische Heizung nach einem der Ansprüche 1 bis 7, wobei die Steuereinrichtung dazu ausgelegt ist, die Schalteinrichtung (16, 17, 20, 21; 112, 122) zu einem Betrieb der elektrischen Heizung (10; 100) im ersten Heizmodus anzusteuern, wenn ein Spannungswert einer Versorgungsspannung der elektrischen Heizung (10; 100) zwischen einem ersten Grenzwert und einem zweiten Grenzwert liegt, der unterhalb des ersten Grenzwertes liegt.

9. Elektrische Heizung nach einem der Ansprüche 1 bis 8, wobei die Steuereinrichtung dazu ausgelegt ist, die Schalteinrichtung (16, 17, 20, 21; 112, 122) zu einem Betrieb der elektrischen Heizung (10; 100) im zweiten Heizmodus anzusteuern, wenn ein Spannungswert einer Versorgungsspannung der elektrischen Heizung (10; 100) unterhalb eines dritten Grenzwertes liegt.

10. Elektrische Heizung nach Anspruch 9, wobei die Steuereinrichtung dazu ausgelegt ist, die Schalteinrichtung (16, 17, 20, 21; 112, 122) zu einem Betrieb der elektrischen Heizung (10; 100) in einem dritten Heizmodus zu schalten, wenn ein Spannungswert einer Versorgungsspannung der elektrischen Heizung (10; 100) zwischen dem dritten Grenzwert und einem vierten Grenzwert liegt, der größer ist als der dritte Grenzwert.

11. Fahrzeug mit einer elektrischen Heizung (10; 100) nach einem der Ansprüche 1 bis 10.

12. Fahrzeug nach Anspruch 11, wobei eine Versorgungsspannung der elektrischen Heizung (10; 100) durch ein Bordnetz des Fahrzeugs bereitgestellt ist.

13. Fahrzeug nach Anspruch 11 oder 12, wobei das Fahrzeug ein Elektro-Fahrzeug ist.

14. Verfahren zum Steuern einer elektrischen Heizung (10; 100) nach einem der Ansprüche 1 bis 10, bei dem die Steuereinrichtung die Schalteinrichtung (16, 17, 20, 21; 112, 122) für einen Heizbetrieb die erste Widerstandsheizeinrichtung (12; 118) und die zweite Widerstandsheizeinrichtung (14; 132) wahlweise zwischen einem ersten Heizmodus, für welchen die erste Widerstandsheizeinrichtung (12; 118) und die zweite Widerstandsheizeinrichtung (14; 132) elektrisch seriell geschaltet werden, und einem zweiten Heizmodus umschaltet, für welchen die erste Widerstandsheizeinrichtung (12; 118) und die zweite Widerstandsheizeinrichtung (14; 132) elektrisch parallel geschaltet werden, wobei die Steuereinrichtung die Schalteinrichtung basierend auf einem Spannungswert einer Versorgungsspannung der elektrischen Heizung (10; 100) steuert.

## Claims

1. Electric heater (10; 100) for a vehicle, comprising:
at least a first resistance heating device (12; 118) and a second resistance heating device (14; 132),
at least one pulse-width-modulation device (52; 120, 126) which is capable of operating the first resistance heating device (12; 118) and/or the second resistance heating device (814; 132) in a pulse-width-modulated manner,
and also at least one switching device (16, 17, 20, 21; 112, 122);
wherein the switching device (16, 17, 20, 21; 112, 122) is capable of switching over the first resistance heating device (12; 118) and the second resistance heating device (14; 132) selectively between a first heating mode, in which the first resistance heating device (12; 118) and the second resistance heating device (14; 132) are connected electrically in series, and a second heating mode, in which the first resistance heating device (12; 118) and the second resistance heating device (14; 132) are connected electrically in parallel, for a heating operation, wherein the electric heater (10; 100) has a control device which is designed to control the switching device (16, 17, 20, 21; 112, 122) on the basis of a voltage value of a supply voltage to the electric heater (10; 100).

2. Electric heater according to Claim 1, wherein the switching device (16, 17, 20, 21; 112, 122) is further capable of switching the first resistance heating device (12; 118) and the second resistance heating device (14; 132) to a third heating mode, in which the first resistance heating device (12; 118) or the second resistance heating device (14; 132) is operated on its own, for a heating operation.

3. Electric heater according to Claim 1 or 2, wherein the switching device (16, 17, 20, 21) is in the form of a relay circuit.

4. Electric heater according to Claim 1 or 2, wherein the switching device (112, 122) is in the form of a quasi full bridge.

5. Electric heater according to one of Claims 1 to 4, wherein the heating resistance value of the first resistance heating device (12; 118) is substantially equal to the heating resistance value of the second resistance heating device (14; 132).

6. Electric heater according to one of Claims 1 to 5, wherein, in the first heating mode and/or in the second heating mode, the first resistance heating device (12; 118) and the second resistance heating device (14; 132) are connected to a common power source (26, 28; 102, 136).

7. Electric heater according to one of Claims 1 to 6, wherein the control device is designed to control the switching device (16, 17, 20, 21; 112, 122) additionally on the basis of a required heating output of the electric heater (10; 100) and/or to control the pulse-width-modulation device (52; 120, 126) on the basis of a voltage value of a supply voltage and/or a required heating output of the electric heater (10; 100).

8. Electric heater according to one of Claims 1 to 7, wherein the control device is designed to actuate the switching device (16, 17, 20, 21; 112, 122) for operation of the electric heater (10; 100) in the first heating mode when a voltage value of a supply voltage to the electric heater (10; 100) lies between a first limit value and a second limit value which lies below the first limit value.

9. Electric heater according to one of Claims 1 to 8, wherein the control device is designed to actuate the switching device (16, 17, 20, 21; 112, 122) for operation of the electric heater (10; 100) in the second heating mode when a voltage value of a supply voltage to the electric heater (10; 100) lies below a third limit value.

10. Electric heater according to Claim 9, wherein the control device is designed to switch the switching device (16, 17, 20, 21; 112, 122) for operation of the electric heater (10; 100) in a third heating mode when a voltage value of a supply voltage to the electric heater (10; 100) lies between the third limit value and a fourth limit value which is greater than the third limit value.

11. Vehicle comprising an electric heater (10; 100) according to one of Claims 1 to 10.

12. Vehicle according to Claim 11, wherein a supply voltage to the electric heater (10; 100) is provided by an on-board electrical system of the vehicle.

13. Vehicle according to Claim 11 or 12, wherein the vehicle is an electric vehicle.

14. Method for controlling an electric heater (10; 100) according to one of Claims 1 to 10, in which method the control device the switching device (16, 17, 20, 21; 112, 122) switches over the first resistance heating device (12; 118) and the second resistance heating device (14; 132) selectively between a first heating mode, for which the first resistance heating device (12; 118) and the second resistance heating device (14; 132) are connected electrically in series, and a second heating mode, for which the first resistance heating device (12; 118) and the second resistance heating device (14; 132) are connected electrically in parallel, for a heating operation, wherein the control device controls the switching device on the basis of a voltage value of a supply voltage to the electric heater (10; 100).

## Revendications

1. Chauffage électrique (10; 100) pour véhicule, le chauffage présentant
au moins un premier dispositif (12; 118) de chauffage par résistance et un deuxième dispositif (14; 132) de chauffage par résistance,
au moins un dispositif (52; 120, 126) de modulation de la largeur d'impulsions qui permet de faire travailler le premier dispositif (12; 118) de chauffage par résistance et/ou le deuxième dispositif (814; 132) de chauffage par résistance en modulation de la largeur d'impulsions et
au moins un circuit (16, 17, 20, 21; 112, 122),
le circuit (16, 17, 20, 21; 112, 122) permettant, pour fonctionner en chauffage, de faire fonctionner sélectivement le premier dispositif (12; 118) de chauffage par résistance et le deuxième dispositif (14; 132) de chauffage par résistance entre un premier mode de chauffage dans lequel le premier dispositif (12; 118) de chauffage par résistance et le deuxième dispositif (14; 132) de chauffage par résistance sont raccordés électriquement en série et un deuxième mode de chauffage dans lequel le premier dispositif (12; 118) de chauffage par résistance et le deuxième dispositif (14; 132) de chauffage par résistance sont raccordés électriquement en parallèle, le chauffage électrique (10; 100) présentant un dispositif de commande conçu pour commander le circuit (16, 17, 20, 21; 112, 122) sur la base de la valeur de la tension d'alimentation du chauffage électrique (10; 100).

2. Chauffage électrique selon la revendication 1, dans lequel le circuit (16, 17, 20, 21; 112, 122) permet en outre, pour un fonctionnement en chauffage, de commuter le premier dispositif (12; 118) de chauffage par résistance et le deuxième dispositif (14; 132) de chauffage par résistance en un troisième mode de chauffage dans lequel le premier dispositif (12; 118) de chauffage par résistance ou le deuxième dispositif (14; 132) de chauffage par résistance sont utilisés seuls.

3. Chauffage électrique selon les revendications 1 ou 2, dans lequel le circuit (16, 17, 20, 21) est configuré comme circuit à relais.

4. Chauffage électrique selon les revendications 1 ou 2, dans lequel le circuit (112, 122) est configuré comme pont quasi complet.

5. Chauffage électrique selon l'une des revendications 1 à 4, dans lequel la valeur de la résistance chauffante du premier dispositif (12; 118) de chauffage par résistance et la valeur de la résistance chauffante du deuxième dispositif (14; 132) de chauffage par résistance sont essentiellement identiques.

6. Chauffage électrique selon l'une des revendications 1 à 5, dans lequel le premier dispositif (12; 118) de chauffage par résistance et le deuxième dispositif (14; 132) de chauffage par résistance sont raccordés à une source de courant (26, 28; 102, 136) commune dans le premier mode de chauffage et/ou dans le deuxième mode de chauffage.

7. Chauffage électrique selon l'une des revendications 1 à 6, dans lequel le dispositif de commande est conçu pour commander le circuit (16, 17, 20, 21; 112, 122) de plus sur la base d'une puissance de chauffage demandée au chauffage électrique (10; 100) et/ou pour commander le dispositif (52; 120, 126) de modulation de la largeur d'impulsions sur la base de la valeur de la tension d'alimentation et/ou de la puissance de chauffage demandée au chauffage électrique (10; 100).

8. Chauffage électrique selon l'une des revendications 1 à 7, dans lequel le dispositif de commande est conçu pour amener le circuit (16, 17, 20, 21; 112, 122) à faire fonctionner le chauffage électrique (10; 100) dans le premier mode de chauffage si la valeur de la tension d'alimentation du chauffage électrique (10; 100) est située entre une première valeur limite et une deuxième valeur limite inférieure à la première valeur limite.

9. Chauffage électrique selon l'une des revendications 1 à 8, dans lequel le dispositif de commande est conçu pour amener le circuit (16, 17, 20, 21; 112, 122) à faire fonctionner le chauffage électrique (10; 100) dans le deuxième mode de chauffage si la valeur de la tension d'alimentation du chauffage électrique (10; 100) est située en dessous d'une troisième valeur limite.

10. Chauffage électrique selon la revendication 9, dans lequel le dispositif est conçu pour amener le circuit (16, 17, 20, 21; 112, 122) à faire fonctionner le chauffage électrique (10; 100) dans un troisième mode de chauffage si la valeur de la tension d'alimentation du chauffage électrique (10; 100) est située entre la troisième valeur limite et une quatrième valeur limite supérieure à la troisième valeur limite.

11. Véhicule doté d'un chauffage électrique (10; 100) selon l'une des revendications 1 à 10.

12. Véhicule selon la revendication 11, dans lequel la tension d'alimentation du chauffage électrique (10; 100) est délivrée par le réseau de bord du véhicule.

13. Véhicule selon les revendications 10 ou 11, dans lequel le véhicule est un véhicule électrique.

14. Procédé de commande d'un chauffage électrique (10; 100) selon l'une des revendications 1 à 10, dans lequel pour faire le fonctionnement en chauffage, le dispositif de commande commute le circuit (16, 17, 20, 21; 112, 122), le premier dispositif (12; 118) de chauffage par résistance et le deuxième dispositif (14; 132) de chauffage par résistance sélectivement entre un premier mode de chauffage pour lequel le premier dispositif (12; 118) de chauffage par résistance et le deuxième dispositif (14; 132) de chauffage par résistance sont raccordés électriquement en série et un deuxième mode de chauffage dans lequel le premier dispositif (12; 118) de chauffage par résistance et le deuxième dispositif (14; 132) de chauffage par résistance de commande commandant le dispositif de commutation sur la base de la valeur de la tension d'alimentation du chauffage électrique (10; 100).
